# FASCICULE DE BREVET EUROPEEN

(11) **EP 0 847 690 B1**
(45) Date de publication et mention de la délivrance du brevet: **28.05.2003**
(21) Numéro de dépôt: 97121788.0
(22) Date de dépôt: 11.12.1997
(51) Int. Cl.: A01M 29/00

(54) **Dispositif électrique pour repousser les volatiles**
Elektrische Vogelabwehrvorrichtung
Electrical bird repelling device

(30) Priorité: 11.12.1996 FR 9615540
(43) Date de publication de la demande: 17.06.1998
(73) Titulaire: SOCIETE ECOPIC LINE S.A.R.L., F-94120 Fontenay-sous-Bois (FR)
(72) Inventeur: Negre Gilles, 60330 Le Plessis Belleville (FR)
(74) Mandataire: Bonneau, Gérard

(56) Documents cités:
- WO-A-84/04022
- WO-A-95/08915
- FR-A- 2 693 081

## Description

La présente invention est relative à un dispositif pour repousser les volatiles, et plus particulièrement à un dispositif électrique pour empêcher que des volatiles ne se posent sur certaines surfaces déterminées.

On sait que les volatiles se posent volontiers sur les surfaces d'appui, même les plus étroites, qu'ils trouvent sur les constructions, et quelles nuisances leur présence engendre alentours.

L'un des moyens les plus efficaces pour prévenir ces nuisances consiste à prévoir sur la surface sur laquelle le stationnement des volatiles est indésirable, un dispositif comportant des parties portées à un certain potentiel électrique. Les volatiles ne pouvant, au risque de désagréables voire dangereuses sensations, rester au contact de telles parties électrifiées, l'éloignement de la surface est ainsi assuré. Un tel dispositif se retrouve par exemple dans le produit TAPO-ES (marque déposée) disponible commercialement, et comprenant une embase en matériau isolant, et deux rails en matériau conducteur de l'électricité entre lesquels est appliquée une différence de potentiel, lesdits rails solidaires de l'embase s'étendant dans le plan de celle-ci. Les deux rails sont suffisamment rapprochés pour qu'un volatile se posant sur le dispositif reçoive une décharge électrique dissuasive.

Un tel dispositif présente toutefois les inconvénients suivants:
- les volatiles accumulent sur les rails électrifiés, dans le but par exemple de former un nid, des brindilles et autres débris formant un matelas isolant, réduisant localement à néant l'efficacité du dispositif;
- dans la mesure où seul le contact avec les deux rails électrifiés dissuade les volatiles, le dispositif doit recouvrir en totalité la surface sur laquelle le stationnement est indésirable, et ne laisser aucun espace découvert, avec le coût que représente ce genre d'installation.

C'est donc un objet de la présente invention de proposer un dispositif qui ne présente pas à la fois tous les inconvénients sus-mentionnés.

Le dispositif de la présente invention comprend une embase en matériau isolant à laquelle est fixé au moins un rail en matériau électriquement conducteur, comportant des lamelles, chacune pouvant être soit rabaissée dans le plan de l'embase, soit relevée d'un certain angle par rapport à celui-ci. Un potentiel électrique est appliqué sur le rail.

Plus particulièrement, la présente invention consiste en un dispositif électrique pour repousser les volatiles comprenant une embase en matériau isolant, et un ou des rails en matériau conducteur de l'électricité sur lesquels est appliqué un potentiel électrique, ledit ou lesdits rails solidaires de l'embase s'étendant dans le plan de ladite embase, et comportant des lamelles sur au moins un premier desdits rails, chacune de ces lamelles pouvant être rabaissée pour se trouver parallèle audit plan de l'embase, ou relevée d'un angle α (α compris entre 0 et 180°) par rapport à celui-ci.

Les lamelles peuvent être rapportées sur le matériau du rail, ou plus avantageusement prédécoupées dans celui-ci.

Lorsque les lamelles sont découpées dans le matériau même du rail, une caractéristique énergétique du potentiel électrique appliqué sur le rail permet d'assurer, au passage du courant électrique le long du rail, une vibration des pointes des lamelles perçue par les volatiles.

Dans un mode d'implémentation, les matériaux du rail et de l'embase sont souples.

Une implémentation particulièrement avantageuse consiste à prévoir deux rails parallèles entre lesquels est appliquée une différence de potentiel électrique. Dans ce cas, une disposition consiste à ce que les lamelles sur un rail se trouvent sensiblement en regard des espaces entre les lamelles sur l'autre rail.

L'invention sera mieux comprise grâce à la description détaillée qui suit, accompagnée des figures suivantes:
Fig.1 est une vue en coupe d'un rail du dispositif de la présente invention.
Fig.2 est une vue par dessus d'un rail du dispositif de la présente invention.
Fig.3 est une vue en perspective d'une implémentation du dispositif de la présente invention comportant deux rails.

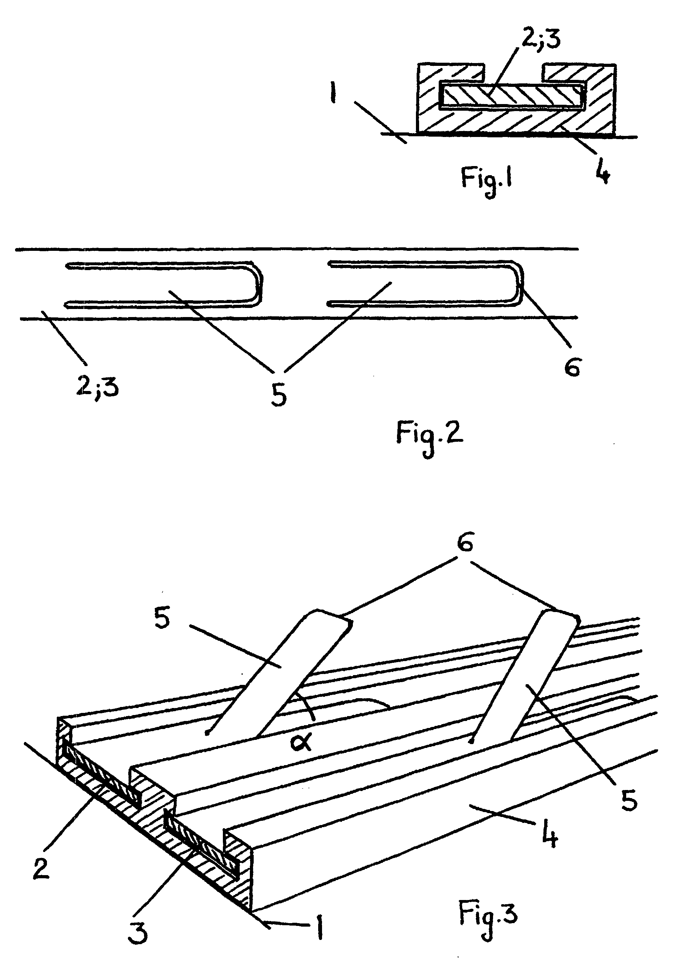

Fig.1 montre une vue en coupe d'un rail du dispositif de la présente invention. Ce rail (2; 3) est fabriqué en matériau conducteur de l'électricité. Dans un mode d'implémentation particulier, il est choisi en feuillard inox demi écroui, d'épaisseur 2/10mm. Sa largeur est avantageusement de sensiblement 14mm.

Il est isolé d'une surface (1) sur laquelle le stationnement des volatiles est indésirable, par une embase (4) en matériau isolant. Un profil PVC extrudé de dureté 83 s'avère particulièrement bien adapté. Sa faible hauteur, sensiblement 2,4mm dans un mode d'implémentation particulier, favorise la dissimulation du dispositif à la surface (1). L'embase (4) est fixée sur la surface (1) par une colle silicone ou tout autre moyen.

Le rail (2; 3) s'étend dans le plan de l'embase (4), et est rendu solidaire de celle-ci par des rebords qui le recouvrent partiellement et viennent l'enserrer. Le montage s'effectue alors de manière aisée par enfilage du rail (2; 3) à une extrémité de l'embase (4). Ceci représente un avantage de fabrication puisque l'embase et le rail peuvent être obtenus en une opération unique.

Le choix de matériaux souples pour l'embase (4) et le rail (2; 3) permet de conditionner le dispositif sous forme de rouleaux, pratiques à acheminer jusqu'au lieu de l'installation, puis à couper sur place à la longueur voulue.

Sur le rail (2; 3) est appliqué un potentiel électrique. La différence de potentiel avec la surface (1) qui, elle, est à la terre, est dissuasive pour les volatiles. La connection entre une alimentation électrique et le matériau conducteur du rail (2; 3) n'est pas détaillée ici, et peut être assurée par n'importe lequel des moyens bien connus de l'homme du métier.

Fig.2 est une vue par dessus d'un rail du dispositif de la présente invention. Des lamelles (5) sont adjointes au rail (2; 3) qui ont chacune la propriété de pouvoir être rabaissée pour se trouver parallèle au plan de celui, et donc au plan de l'embase (4), ou relevée par rapport à ce plan. Dans ce dernier cas, les lamelles (5) constituent une barrière électrifiée aux pointes (6) relevées sur laquelle les volatiles ne peuvent pas former de matelas de matériaux isolants qui, autrement, rendrait le dispositif localement inefficace. De telles lamelles à hauteur ajustable permettent en outre d'adapter le dispositif pour repousser les volatiles au nombre et à la taille attendus de ceux-ci, à la hauteur disponible au dessus de la surface sur laquelle le stationnement est indésirable, et aux risques de nidification en fonction de la configuration des lieux.

Les lamelles (5) peuvent être des picots en matériau conducteur de l'électricité rapportés sur le rail (2; 3), et fixés à celui-ci par tout moyen connu de l'homme du métier, tel le soudage ou une articulation mécanique, et permettant le rabaissement dans les plans du rail (2; 3) et de l'embase (4), comme le relevage par rapport à ceux-ci. Les différentes lamelles peuvent, ou non, toutes présenter le même angle d'inclinaison par rapport auxdits plans. Dans un mode d'implémentation particulièrement économique, les lamelles sont obtenues par prédécoupage dans le matériau qui constitue le rail (2; 3). Ce prédécoupage peut être avantageusement un poinçonnage en série au moment où le rail (2; 3) est étiré et mis en forme lors de sa fabrication.

Le profil de l'extrémité libre des pointes (6) des lamelles (5) n'a pas d'influence sur l'efficacité du dispositif.

Dans un mode d'implémentation particulier, les lamelles (6) sont prédécoupées sensiblement tous les 100mm, et ont une longueur de sensiblement 60mm. Leur largeur peut-être sensiblement de 4mm.

Fig. 3 est une vue en perspective d'une implémentation du dispositif de la présente invention comportant deux rails. Chacun des rails (2; 3) peut, ou non, comporter des lamelles (5). Lorsqu'il en comporte, chacune peut être relevée d'un angle α (α compris entre 0 et 180°) par rapport au plan de l'embase (4). Cette opération est effectuée en toute fin d'installation du dispositif, en fonction de l'effet dissuasif recherché. Ceci présente l'avantage que les installateurs ne sont pas gênés dans leurs mouvements pendant la plus grande partie de l'installation consistant à fixer l'embase (4) sur la surface (1).

Un potentiel électrique différent est appliqué sur l'un et l'autre rail (2; 3). La différence de potentiel obtenue est dissuasive pour les volatiles. Le système d'alimentation électrique, connu de l'homme du métier n'est pas détaillé ici.

Un effet particulièrement intéressant, lorsque les lamelles (5) sont prédécoupées dans le matériau des rails (2, 3), est obtenu en choisissant d'appliquer, au travers de l'alimentation électrique, une impulsion périodique d'énergie suffisante pour que, sensiblement au moment du passage du courant électrique, les pointes (6) de celles des lamelles (5) qui sont relevées entrent en une vibration d'amplitude infime mais que les volatiles perçoivent à distance. Cet effet peut également être obtenu dans le cas d'un dispositif à rail (2; 3) unique. Des études montrent que, après un premier contact avec les rails (2, 3) ou les lamelles (5) électrifiés, les volatiles détectent à une certaine distance l'impulsion électrique périodique, et restent durablement et sans que d'autres contacts soient nécessaires, dissuadés de s'approcher du dispositif. Ceci a pour conséquence que la surface (1) sur laquelle le stationnement est indésirable n'a plus besoin que partiellement d'être couverte par le dispositif selon l'invention, permettant ainsi, à efficacité égale, une baisse sensible du coût de l'installation.

Pour un constituant de matériau de rail (2; 3) donné, l'homme du métier sait développer l'alimentation électrique libérant l'énergie suffisante pour obtenir l'effet recherché. Pour un feuillard inox demi écroui d'épaisseur 2/10mm, l'impulsion électrique adéquate est sensiblement de courant 8mA et de tension crête 10kV, ce qui libère une énergie de l'ordre de 4J. La période peut-être de 1 à 2s.

Dans le cas de l'implémentation du dispositif de la présente invention comportant deux rails (2, 3), et où chacun des deux rails comporte des lamelles (5), une disposition particulière de celles-ci permet une efficacité maximum du dispositif. On peut ainsi, par un coulissement approprié d'un rail (2) dans l'embase (4) ou tout autre moyen, faire en sorte que les lamelles (5) sur ce rail (2) se trouvent sensiblement en regard des espaces entre les lamelles (5) sur l'autre rail (3). Autrement dit, faire en sorte que les lamelles (5) soient disposées en triangle, c'est à dire que la distance entre les pointes (6) respectives d'une lamelle (5) sur un premier rail (2), et de la lamelle (5) la plus proche sur le second rail (3), les deux lamelles (5) étant rabaissées, soit supérieure à la distance minimum qui séparerait lesdites pointes (6) si lesdites lamelles (5) se trouvaient exactement en regard l'une de l'autre. On obtient ainsi, vu perpendiculairement par rapport au dispositif, qui est aussi l'angle d'approche des volatiles, une forêt dense de lamelles (5) alternativement reliées à un potentiel électrique puis à un autre.

## Revendications

1. Dispositif électrique pour repousser les volatiles comprenant une embase (4) en matériau isolant, et un ou des rails (2; 3) en matériau conducteur de l'électricité sur lesquels est appliqué un potentiel électrique, ledit ou lesdits rails solidaires de l'embase s'étendant dans le plan de ladite embase, ledit dispositif étant **caractérisé en ce que** ledit rail ou au moins un premier (2) desdits rails comporte des lamelles (5) chacune pouvant être rabaissée pour se trouver parallèle audit plan de l'embase, ou relevée d'un angle α (α compris entre 0 et 180°) par rapport à celui-ci.

2. Le dispositif de la revendication 1 **caractérisé en ce que** lesdites lamelles (5) sont prédécoupées dans le matériau dudit premier rail (2).

3. Le dispositif de la revendication 2 **caractérisé en ce que** ledit potentiel électrique est une impulsion d'énergie suffisante pour faire vibrer les pointes (6) desdites lamelles (5) lorsqu'elles sont relevées, sensiblement au moment de propagation du courant électrique le long dudit premier rail (2).

4. Le dispositif de l'une des revendications 1 à 3 **caractérisé en ce que** les matériaux de ladite embase (4) et dudit ou desdits rails (2; 3) sont souples.

5. Le dispositif de l'une des revendications 1 à 4 **caractérisé en ce que** ledit ou lesdits rails (2; 3) sont en feuillard inox demi écroui d'épaisseur 2/10mm.

6. Le dispositif de la revendication 5 lorsqu'elle dépend de la revendication 3, **caractérisé en ce que** ladite impulsion est sensiblement de courant 8mA et de tension crête 10kV, pour libérer une énergie de sensiblement 4J.

7. Le dispositif de l'une des revendications 1 à 6 **caractérisé en ce qu'**il comprend deux rails (2, 3) parallèles, ledit potentiel électrique étant différent sur l'un et l'autre rail.

8. Le dispositif de la revendication 7 **caractérisé en ce que** un second rail (3) comporte des lamelles (5), et que les lamelles (5) dudit dispositif sont disposées en triangle, c'est à dire que la distance entre les pointes (6) respectives d'une lamelle (5) sur ledit premier rail (2), et de la lamelle (5) la plus proche sur ledit second rail (3), les deux lamelles (5) étant rabaissées, est supérieure à la distance minimum qui séparerait lesdites pointes (6) si lesdites lamelles (5) se trouvaient exactement en regard l'une de l'autre.

## Patentansprüche

1. Elektrische Vogelabwehrvorrichtung mit einem Sockel (4) aus einem isolierenden Werkstoff und einer Schiene oder Schienen (2; 3) aus einem elektrisch leitenden Werkstoff, an die ein elektrisches Potential angelegt ist, wobei sich die mit dem Sockel fest verbundene Schiene oder Schienen in der Ebene des Sockels erstrecken, **dadurch gekennzeichnet, daß** die Schiene oder mindestens eine erste (2) der Schienen Lamellen (5) aufweist, deren jede gesenkt werden kann, um zu der Ebene des Sockels parallel zu sein, oder bezüglich dieser um einen Winkel α angehoben werden kann (α zwischen 0 und 180°).

2. Vorrichtung nach Anspruch 1, **dadurch gekennzeichnet, daß** die Lamellen (5) in dem Werkstoff der ersten Schiene (2) vorausgeschnitten sind.

3. Vorrichtung nach Anspruch 2, **dadurch gekennzeichnet, daß** das elektrische Potential ein so starker Energieimpuls ist, daß die Spitzen (6) der Lamellen (5), wenn sie angehoben sind, im wesentlichen zu dem Zeitpunkt der Ausbreitung des elektrischen Stroms längs der ersten Schiene zum Schwingen gebracht werden.

4. Vorrichtung nach einem der Ansprüche 1 bis 3, **dadurch gekennzeichnet, daß** die Werkstoffe des Sockels (4) und der Schiene bzw. Schienen (2; 3) biegsam sind.

5. Vorrichtung nach einem der Ansprüche 1 bis 4, **dadurch gekennzeichnet, daß** die Schiene oder die Schienen (2; 3) aus einem halb gehärteten Inoxblech mit einer Dicke von 2/10 mm bestehen.

6. Vorrichtung nach Anspruch 5, wenn er von Anspruch 3 abhängig ist, **dadurch gekennzeichnet, daß** der Impuls im wesentlichen eine Stromstärke von 8mA und eine Spitzenspannung von 10kV hat, um eine Energie von im wesentlichen 4J abzugeben.

7. Vorrichtung nach einem der Ansprüche 1 bis 6, **dadurch gekennzeichnet, daß** sie zwei parallele Schienen (2, 3) aufweist, wobei das elektrische Potential auf den beiden Schienen verschieden ist.

8. Vorrichtung nach Anspruch 7, **dadurch gekennzeichnet, daß** die zweite Schiene (3) Lamellen (5) aufweist, und daß die Lamellen (5) der Vorrichtung in einem Dreieck angeordnet sind, d.h. daß der Abstand zwischen den jeweiligen Spitzen (6) einer Lamelle (5) auf der ersten Schiene (2) und der am nächsten gelegenen Lamelle (5) auf der zweiten Schiene (3) bei gesenkten Lamellen (5) größer als der Mindestabstand ist, der zwischen diesen Spitzen (6) bestünde, wenn die Lamellen (5) sich genau einander gegenüber befänden.

## Claims

1. Electric device for repelling birds comprising a base (4) made of an insulating material, and one or several rails (2, 3) made of an electrically conductive material whereon an electric potential is applied, said rail or rails secured to the base, extending in the plane of said base, said device being **characterized in that** said rail or at least a first one of said rails (2) is provided with blades (5), each blade having the capacity of being either lowered to be parallel to the base plane, or raised by a certain angle α (α ranging from 0 to 180°) against the base plane.

2. Device according to claim 1 **characterized in that** said blades (5) are pre-cut in the material of said first rail (2).

3. Device according to claim 2 **characterized in that** said electric potential is a pulse whose energy is high enough to produce a vibration of the tips (6) of said blades (5) when they are raised, substantially when the electric current propagates along said first rail (2).

4. Device according to claim 1 **characterized in that** the material said base (4) and said rail or rails (2, 3) are made of, is flexible.

5. Device according to claim 1 **characterized in that** said rail or rails (2, 3) are made of 2/10 mm thick half hard stainless steel strip.

6. Device according to claim 3 **characterized in that** said pulse has substantially a 8 mA intensity and 10 kV peak voltage, for releasing an energy of substantially 4 J.

7. Device according to claim 1 **characterized in that** it comprises two parallel rails (2, 3), said electric potential being different on both rails.

8. Device according to claim 7 **characterized in that** a second rail (3) comprises blades (5), and that blades (5) of said device form a triangle, which means that the distance between the respective tips (6) of a blade (5) from said first rail (2), and of the closest blade (5) from said second rail (3), both blades (5) being lowered, is greater than the minimum distance that would separate said tips (6) if said blades (5) were exactly facing each other.
